# EUROPÄISCHE PATENTSCHRIFT

(11) **EP 3 673 133 B1**
(45) Veröffentlichungstag und Bekanntmachung des Hinweises auf die Patenterteilung: **24.04.2024**
(21) Anmeldenummer: 18765549.3
(22) Anmeldetag: 15.08.2018
(51) Int. Cl.: E05F 15/611, H02H 7/085

(54) **ANTRIEBSVORRICHTUNG FÜR EINE FAHRZEUGKLAPPE**
DRIVE DEVICE FOR A VEHICLE FLAP
DISPOSITIF D'ENTRAÎNEMENT POUR UN OUVRANT DE VÉHICULE

(30) Priorität: 22.08.2017 DE 202017105031 U
(43) Veröffentlichungstag der Anmeldung: 01.07.2020
(73) Patentinhaber: Edscha Engineering GmbH, 42855 Remscheid (DE)
(72) Erfinder: BALS, Jochen, 44319 Dortmund (DE); ZANDER, Marc, 40885 Ratingen (DE)
(74) Vertreter: IPrime Bonnekamp Sparing Patentanwaltsgesellschaft mbH
(86) Internationale Anmeldenummer: PCT/DE2018/100714
(87) Internationale Veröffentlichungsnummer: WO 2019/037817

(56) Entgegenhaltungen:
- EP-A2- 1 783 309
- WO-A1-2015/177295
- DE-A1-102015 112 807
- DE-B4-102009 042 456

## Beschreibung

Die Erfindung betrifft eine Antriebsvorrichtung für eine Fahrzeugklappe. Ferner betrifft die Erfindung ein Fahrzeug mit einer Antriebsvorrichtung für eine Fahrzeugklappe.

Aus der Praxis sind Antriebsvorrichtungen für Fahrzeugklappen bekannt, welche ein automatisches Öffnen bzw. Schließen der Fahrzeugklappe ermöglichen. Derartige Antriebsvorrichtungen werden dabei oft über eine Fernbedienung oder auch optische Sensoren von einem Standby-Modus in einen Betriebsmodus geschaltet. Dabei weisen derartige Antriebsvorrichtungen einen Motor auf, welcher meist ein Elektromotor ist. Der Elektromotor wird zweckmäßigerweise von der internen Stromversorgung des Fahrzeugs mit Energie versorgt und ist mit einem Getriebe gekoppelt, welches mit einem oder mehreren mechanischen Verstell-Elementen verbunden ist. Die Antriebsvorrichtung ist üblicherweise als Linearantrieb, insbesondere als Spindelantrieb, ausgebildet. Linearantriebe haben dabei den Vorteil, dass diese sehr einfach aufgebaut sind und leicht steuerbar sind. Der Motor treibt dabei eines von Spindelmutter und Spindelstange drehend an, sodass zwei sich gegenüberliegende Gehäuseteile der Antriebsvorrichtung, welche jeweils mit der Spindelmutter bzw. der Spindelstange verbunden sind, sich relativ zueinander bewegen.

Neben der Funktion, dass die Fahrzeugklappe automatisch geschlossen bzw. geöffnet werden soll, kommt derartigen Antriebsvorrichtungen oftmals auch die Funktion eines Türfeststellers zu, welcher die Tür abbremsen oder feststellen soll. Ein Abbremsen der angetriebenen Fahrzeugklappe erfolgt meist durch Einsatz einer permanenten Bremse, welche auf den Antriebsstrang der Antriebsvorrichtung einwirkt. Es ist aus der Praxis bekannt, dass der Elektromotor selbsthemmend ausgebildet sein kann, sodass der Elektromotor selbst als mechanische Bremse auf eine Verschwenkungsbewegung der Fahrzeugklappe einwirkt. Dennoch treten in bestimmten Situationen überhöhte Kräfte an der Fahrzeugklappe insbesondere in Schließrichtung auf, wobei die üblichen Maßnahmen wie vorstehend beschrieben oft nicht ausreichen, um eine genügend große Haltekraft insbesondere im Fall eines Spannungsabfalls bereitzustellen.

WO 2015/177295 A1 zeigt eine Antriebsvorrichtung für eine Fahrzeugklappe, insbesondere für eine motorgetriebene Tür eines Zugfahrzeugs, umfassend einen Elektromotor zum Antrieb der Fahrzeugklappe und einen Versorgungsschaltkreis mit einer ersten Spannungsquelle zur Stromversorgung des Elektromotors, einer ersten elektrischen Zuleitung und einer zweiten elektrischen Zuleitung, wobei die erste Spannungsquelle zwischen der ersten elektrischen Zuleitung und der zweiten elektrischen Zuleitung angeordnet ist. Weiter umfasst die gezeigte Antriebsvorrichtung einen Steuerungsschaltkreis mit einer Schaltsteuervorrichtung und einem Schaltelement und einer Diode, welche zwischen der ersten elektrischen Zuleitung und der zweiten elektrischen Zuleitung angeschlossen sind. Dabei sind das Schaltelement und die Diode in Reihe geschaltet. Das Schaltelement wird dabei durch einen Transistor bzw. durch eine Darlingtonschaltung von Transistoren gebildet. Nachteilig ist der Versorgungsschaltkreis bzw. der Steuerungsschaltkreis relativ aufwendig mit sehr vielen Bauteilen und zusätzlichen Widerständen ausgestaltet, was die Fehleranfälligkeit entsprechend erhöhen kann.

EP 1 783 309 A1 zeigt eine Antriebsvorrichtung, umfassend einen Gleichstrommotor und einen Versorgungsschaltkreis mit einer ersten Spannungsquelle zur Stromversorgung des Gleichstrommotors, einer ersten elektrischen Zuleitung und einer zweiten elektrischen Zuleitung, wobei die erste Spannungsquelle zwischen der ersten elektrischen Zuleitung und der zweiten elektrischen Zuleitung angeordnet ist. Weiter umfasst die Antriebsvorrichtung eine Schaltsteuervorrichtung, wobei zwei in Reihe geschaltete Schaltelemente und zwei in Reihe geschaltete jeweils in entgegengesetzte Durchlassrichtungen orientierte Zenerdioden zwischen der ersten elektrischen Zuleitung und der zweiten elektrischen Zuleitung parallel zueinander angeschlossen sind. Nachteilig an der gezeigten Antriebsvorrichtung ist, dass die Antriebsvorrichtung durch die gezeigte Schaltsteuervorrichtung bei Wegfall der Stromversorgung bzw. dem Öffnen des Schaltelementes im Wesentlichen nur gedämpft zwischen zwei Endposition verfährt, da die verwendeten Zenerdioden nur bis zu der entsprechenden Sperrspannung durchschalten und somit ein Kurzschluss mit entsprechender Bremswirkung vorliegt. DE 10 2009 042 456 B4 zeigt eine Antriebsvorrichtung für eine schwenkbare Fahrzeugklappe, wobei die Antriebsvorrichtung als Linearantrieb ausgebildet ist. Die Antriebsvorrichtung umfasst einen Elektromotor, welcher über eine Steuerungsvorrichtung betrieben bzw. gesteuert wird. Die Steuerungsvorrichtung umfasst eine Steuerungs- und Sicherheitsschaltung, welche auf einer Elektronikplatine angeordnet ist, welche wiederum in einem Gehäuserohr der Antriebsvorrichtung befestigt ist. Die Antriebsvorrichtung umfasst weiter eine erste elektrische Zuleitung und eine zweite elektrische Zuleitung für den Elektromotor, wobei ein als Triac ausgebildetes Schaltelement parallel zu dem Motor geschaltet ist und das Gate des Triacs über einen hochohmigen Widerstand und eine Diode mit der ersten elektrischen Zuleitung 51 verbunden ist.. Nachteilig an der gezeigten Antriebsvorrichtung ist, dass die Steuerung- und Sicherheitsschaltung sehr viele einzelne Bauteile umfasst, sodass die Antriebsvorrichtung entsprechend wartungsintensiv und fehleranfällig ist. Zudem sind die Kosten bei der Herstellung der Antriebsvorrichtung entsprechend hoch.

DE 10 2015 112 807 A1 zeigt eine Antriebsvorrichtung mit einem Gleichstrommotor, welcher über eine erste elektrische Zuleitung und eine zweite elektrische Zuleitung mit Strom versorgt wird. Parallel zu dem Gleichstrommotor sind zwischen der ersten elektrischen Zuleitung und der zweiten elektrischen Zuleitung ein Transistor und mehrere Widerstände angeordnet. Weiter ist ein Varistor und ein Widerstand parallel zu dem Transistor geschaltet, sodass bei Überschreiten eines bestimmten Spannungswertes zwischen der ersten elektrischen Zuleitung und der zweiten elektrischen Zuleitung ein kurzzeitiger Kurzschluss des Motors bzw. der Spannungsquelle erfolgt. Hierdurch wird ein Abbremsen des Motors bewirkt. Nachteilig an der gezeigten Antriebsvorrichtung ist, dass diese zwar bei einer Überbeanspruchung des Motors eine Bremsung erzeugt, jedoch keine Abbremsung bei einen Ausfall der Stromversorgung bereitstellt. Weiter wird eine Abbremsung in beiden Verschwenkungsrichtungen der Fahrzeugklappe bewirkt. Dies ist jedoch insbesondere nachteilig in solchen Situation, bei denen die Fahrzeugklappe in Schließrichtung durch äußere Kräfte, insbesondere der eigenen Gewichtskraft, vorbelastet ist. Hierdurch wird es deutlich erschwert, eine Fahrzeugklappe in einer Notsituation schnell zu öffnen und gleichzeitig zu verhindern, dass die Fahrzeugklappe wieder in Schließrichtung zurückbewegt wird.

Es ist die Aufgabe der Erfindung, eine Antriebsvorrichtung für eine schwenkbare Fahrzeugklappe bzw. ein Fahrzeug anzugeben, welche ein zuverlässiges und sicheres Verschwenken der Fahrzeugklappe erlauben. Insbesondere soll ein manuelles Verschwenken auch im Falle eines Spannungsabfalls im Fahrzeug zumindest in einer Richtung möglich sein.

Die vorgenannte Aufgabe wird erfindungsgemäß durch eine Antriebsvorrichtung mit den Merkmalen des Patentanspruchs 1 bzw. durch ein Fahrzeug gemäß Patentanspruch 14 gelöst.

Gemäß einem Aspekt der Erfindung ist eine Antriebsvorrichtung für eine schwenkbare Fahrzeugklappe geschaffen, umfassend einen Elektromotor zum Antrieb der Fahrzeugklappe und einen Versorgungsschaltkreis. Der Versorgungsschaltkreis umfasst eine erste Spannungsquelle zur Stromversorgung des Elektromotors, eine erste elektrische Zuleitung und eine zweite elektrische Zuleitung, wobei die erste Spannungsquelle zwischen der ersten elektrischen Zuleitung und der zweiten elektrischen Zuleitung angeordnet ist. Weiter umfasst die Antriebsvorrichtung einen Steuerungsschaltkreis, umfassend eine Logikeinheit, eine zweite Spannungsquelle und eine Schaltsteuervorrichtung, wobei ein Schaltelement und eine Diode zwischen der ersten elektrischen Zuleitung und der zweiten elektrischen Zuleitung angeschlossen sind und das Schaltelement und die Diode in Reihe geschaltet sind. Das Schaltelement ist dabei mit der Schaltsteuervorrichtung gekoppelt. Weiter stellt die Schaltsteuervorrichtung eine Steuerspannung zum Schalten des Schaltelements bereit. Vorteilhaft wird hierdurch ermöglicht, den Kurzschluss des Elektromotors und damit die Abbremsung desselben in Abhängigkeit äußerer Zustände, beispielsweise dem Zustand der Spannungsversorgung der Schaltvorrichtung bzw. der Spannungsversorgung des Elektromotors, erfolgen zu lassen. Die erfindungsgemäße Antriebsvorrichtung zeichnet sich dadurch aus, dass die Logikeinheit parallel zu der Schaltsteuervorrichtung geschaltet ist, wobei die zweite Spannungsquelle sowohl die Logikeinheit als auch die Schaltsteuervorrichtung mit Strom versorgt. Vorteilhaft wird es durch das Vorsehen einer Logikeinheit ermöglicht, eine Auswertung äußerer Parameter über eine gewisse Zeitspanne vorzunehmen. Weiter vorteilhaft wird es ermöglicht, die Stromversorgung der Schaltsteuervorrichtung auch für einen Spannungsabfall der Spannungsquelle so zu regulieren, dass das mit der Schaltsteuervorrichtung 3 gekoppelte Schaltelement geschlossen wird Weiter vorteilhaft wird durch die Antriebsvorrichtung bzw. das Vorsehen eines Schaltelementes und einer Diode in dem Versorgungsschaltkreis ein zuverlässiges und sicheres Verschwenken der Fahrzeugklappe in Öffnungsrichtung bzw. Schließrichtung ermöglicht, wobei die Antriebsvorrichtung in der jeweils entgegengesetzte Schwenkrichtung durch Kurzschluss des Elektromotors abgebremst bzw. die Fahrzeugklappe gehalten wird. Vorteilhaft kann ein Kurzschluss des Elektromotors besonders zuverlässig und einfach realisiert werden. Besonders vorteilhaft kann dies in einer Unfallsituation sein, wenn die Stromversorgung in dem Fahrzeug abgefallen ist und die Insassen die Tür in Öffnungsrichtung möglichst einfach öffnen wollen. Es wird vorteilhaft erreicht, die erste elektrische Zuleitung und die zweite elektrische Zuleitung zu dem Elektromotor kurzzuschließen, wobei durch die Diode sichergestellt ist, dass der Elektromotor in einer Drehrichtung gebremst und in der entgegengesetzten Drehrichtung weitgehend frei drehbar ist.

In einer bevorzugten Ausgestaltung ist die Diode in Richtung von der ersten elektrischen Zuleitung zu der zweiten elektrischen Zuleitung in Durchlassrichtung angeordnet. In einer alternativen Ausgestaltung ist die Diode in Richtung von der ersten elektrischen Zuleitung zu der zweiten elektrischen Zuleitung in Sperrrichtung angeordnet. Besonders bevorzugt ist die Diode zwischen der ersten elektrischen Zuleitung und der zweiten elektrischen Zuleitung derart angeordnet, dass die Antriebsvorrichtung bei einem Kurzschluss in Schließrichtung gebremst wird. Hierdurch wird vorteilhaft sichergestellt, dass eine Person im Falle einer Fehlfunktion der Stromversorgung der Antriebsvorrichtung die Fahrzeugklappe öffnen kann, ohne dass die Fahrzeugklappe sich wieder wegen ihrer eigenen Gewichtskraft in Schließrichtung zurückbewegt.

In einer besonders bevorzugten Ausgestaltung ist die Schaltsteuervorrichtung als Relais ausgebildet. Vorteilhaft kann so ein Kurzschluss des Elektromotors besonders zuverlässig und einfach realisiert werden. In einer zweckmäßigen Ausgestaltung ist das mit der Schaltsteuervorrichtung gekoppelte Schaltelement als Ruhekontakt ausgebildet. Ein Ruhekontakt zeichnet sich dadurch aus, dass das Schaltelement in einer geschlossenen Stellung ist, wenn die Steuerspule unbelastet ist. Somit wird für den Fall, dass ein Stromausfall in der Antriebsvorrichtung besteht, eine Bremsung des Elektromotors in zumindest einer Richtung realisiert.

In einer zweckmäßigen Ausgestaltung ist das mit der Schaltsteuervorrichtung gekoppelte Schaltelement als Umschaltkontakt ausgebildet. Vorteilhaft kann hierdurch ein Kurzschluss des Elektromotors auch für den Fall eines Spannungsabfalls realisiert werden, ohne dass die Spannung im Fahrzeug bzw. in der Antriebsvorrichtung vollständig abfallen muss. Zudem wird es möglich, die während eines Spannungsabfalls auftretenden Spannungsspitzen für das Schalten des Schaltelementes zu nutzen.

In einer alternativen Ausgestaltung ist das Schaltelement als bipolarer Transistor ausgebildet. Die Basis des Transistors ist zweckmäßigerweise mit der Schaltsteuervorrichtung verbunden. Vorteilhaft stellt die Schaltsteuervorrichtung eine Steuerspannung zwischen Basis und Kollektor des Transistors bereit. Vorteilhaft kann so über die Schaltsteuervorrichtung eine gezielte Ansteuerung des Transistors erfolgen. Zudem lässt sich durch das Vorsehen eines Transistors vorteilhaft eine Abstufung der Bremskraft während der manuellen Verschwenkung der Fahrzeugklappe realisieren.

In einer weiteren Ausgestaltung ist der Transistor als npn-Transistor ausgebildet. Alternativ dazu ist der Transistor als pnp-Transistor ist ausgebildet.

Durch entsprechende Auswahl zwischen den beiden Transistorarten lassen sich je nach Ausgestaltung der Schaltsteuervorrichtung sowohl negative als auch positive Steuerspannungen zur Schaltung des Transistors verwenden.

In einer alternativen Ausgestaltung ist das Schaltelement als unipolarer Transistor ausgebildet. Zweckmäßigerweise ist das Gate des unipolaren Transistors mit der Schaltsteuervorrichtung verbunden. Zweckmäßigerweise stellt die Schaltsteuervorrichtung eine Steuerspannung an dem Gate bereit. Hierdurch wird es vorteilhaft ermöglicht, dass über die Schaltsteuervorrichtung eine gezieltere Abbremsung in Abhängigkeit äußerer Parameter möglich ist. Die äußeren Parameter können beispielsweise der momentane Öffnungswinkel der Fahrzeugklappe oder die Beschleunigung bzw. Geschwindigkeit der Fahrzeugklappe während des Verschwenkens sein. Weiter können die äußeren Parameter optische Signale sein, wie beispielsweise die Entfernung eines Hindernisses zu der Fahrzeugklappe. Vorteilhaft kann so verhindert werden, dass das Hindernis bei einem Öffnen der Fahrzeugklappe mit derselben kollidiert und Beschädigungen auftreten. Die optischen Signale können durch ein optisches Element wie eine Kamera detektiert und durch die Schaltsteuervorrichtung in die entsprechende Steuerspannung an dem Gate bzw. dem Schaltelement umgesetzt werden.

Zweckmäßigerweise ist die Logikeinheit mit der Schaltsteuervorrichtung gekoppelt. Hierdurch wird die Schaltsteuervorrichtung und somit das mit der Schaltsteuervorrichtung gekoppelte Schaltelement in Abhängigkeit äußerer Parameter steuerbar. Vorteilhaft können Auswertungen der äußeren Parameter über eine Auswerteelektronik erfolgen, welche für die Beschaltung des Steuerungsschaltkreises genutzt werden kann.

Besonders bevorzugt ist die Diode als Freilaufdiode ausgebildet. Freilaufdioden werden üblicherweise als Schutz vor Überspannung benutzt, wobei die Schleusenspannung, bei welcher ein Strom durch die Diode in Durchlassrichtung fließt, typischerweise je nach Halbleiterelement zwischen 0, 3 V und 0,7 V beträgt.

In einer ersten Ausgestaltung ist der Elektromotor als Gleichstrommotor ausgebildet. Vorteilhaft wird der Elektromotor bei einem Kurzschluss der elektrischen Zuleitungen durch Selbstinduktion abgebremst. In einer Weiterbildung ist Elektromotor als bürstenloser Gleichstrommotor ausgebildet. Der Gleichstrommotor ist zweckmäßigerweise derart ausgebildet, dass ein mechanischer Wechselrichter umfasst ist. Besonders bevorzugt umfasst der Gleichstrommotor einen Permanentmagneten, zwischen deren beiden Pole ein Rotor, welcher eine Spule umfasst, angeordnet ist. Dabei wird in dem Rotor des Gleichstrommotors ein drehzahlabhängiger Wechselstrom erzeugt. Besonders vorteilhaft in Bezug auf eine Antriebsvorrichtung und der gestellten Aufgabe ist dabei, dass durch einen Kurzschluss der Spannungsversorgung des Gleichstrommotors dieser in einen Gleichstromgenerator umgewandelt werden kann, welcher bei einer äußeren mechanischen Bewegung des Rotors eine Bremskraft aufgrund der Lenz'schen Regel gegen die von außen mechanisch erzwungene Bewegung des Rotors erzeugt. Dadurch, dass zudem eine Diode in den Versorgungsschaltkreis des Gleichstrommotors parallel geschaltet ist, wird sichergestellt, dass die Bremswirkung des Gleichstrommotors effektiv nur in einer Drehrichtung auftritt.

Nach einem weiteren Aspekt der Erfindung ist ein Fahrzeug geschaffen, umfassend eine Fahrzeugklappe, wobei die Fahrzeugklappe verschwenkbar an einem Fahrzeugkarosserieteil angeordnet ist. Das Fahrzeug umfasst weiter eine Antriebsvorrichtung, wobei die Antriebsvorrichtung mit einem ersten Ende verschwenkbar an einem von Fahrzeugklappe und Fahrzeugkarosserieteil und mit einem zweiten Ende verschwenkbar an dem anderen von Fahrzeugklappe und Fahrzeugkarosserieteil gekoppelt ist. Das Fahrzeug zeichnet sich dabei dadurch aus, dass die Antriebsvorrichtung wie vorstehend beschrieben ausgebildet ist.

Weitere Vorteile, Weiterbildungen und Eigenschaften der Erfindung ergeben sich aus der nachstehenden Beschreibung eines bevorzugten Ausführungsbeispiels sowie aus den abhängigen Ansprüchen.

Die Erfindung wird nunmehr unter Bezugnahme auf die anliegenden Zeichnungen anhand bevorzugter Ausführungsbeispiele der Erfindung näher erläutert.
- Fig. 1: zeigt schematisch ein erstes Ausführungsbeispiel einer erfindungsgemäßenAntriebsvorrichtung
- Fig. 2: zeigt schematisch ein zweites Ausführungsbeispiel einer erfindungsgemäßenAntriebsvorrichtung
- Fig. 3: zeigt schematisch ein drittes Ausführungsbeispiel einer erfindungsgemäßenAntriebsvorrichtung

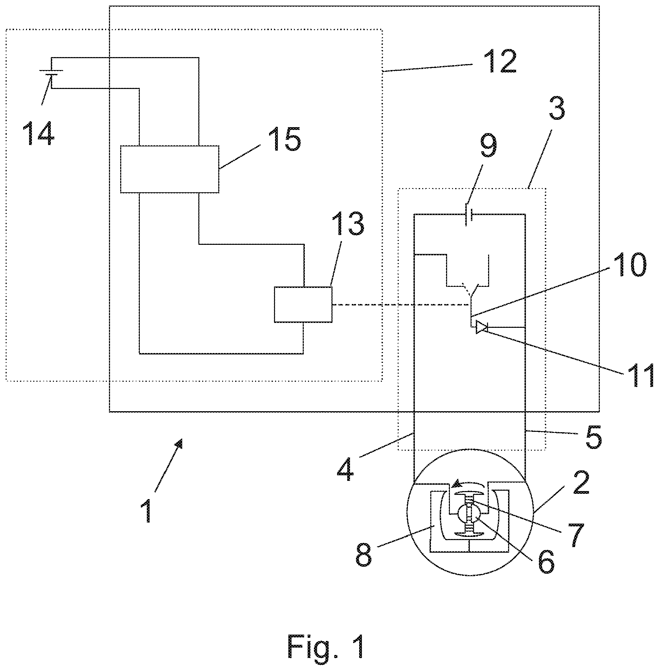

Fig. 1 zeigt schematisch ein erstes Ausführungsbeispiel einer Antriebsvorrichtung 1, wobei die Antriebsvorrichtung 1 einen Motor 2 umfasst. Der Motor 2 ist als Gleichstrommotor ausgebildet, welcher über einen Versorgungsschaltkreis 3 mit Strom versorgt wird. Der Versorgungschaltkreis 3 umfasst dabei eine erste elektrische Zuleitung 4 und eine zweite elektrische Zuleitung 5, welche mit einem Kommutator 6 des Elektromotors 2 verbunden sind. Der Kommutator 6 wiederum ist mit einer Spule 7, welche drehbar gelagert ist, verbunden.

Die drehbare Spule 7 ist von einem Permanentmagneten 8 umgeben. Die erste elektrische Zuleitung 4 und die zweite elektrische Zuleitung 5 sind dabei mit einer ersten Spannungsquelle 9 verbunden, sodass die Stromrichtung in der Spule 7 von dem jeweils aktuell vorliegenden Rotationswinkel der Spule 7 relativ zu dem ortsfesten Kommutator 6 abhängt.

Zwischen der ersten elektrischen Zuleitung 4 und der zweiten elektrischen Zuleitung 5 sind ein Schaltelement 10, welches als Ruhekontakt ausgebildet ist, und eine Diode 11, welche hier als Freilaufdiode ausgebildet ist, parallel zu dem Motor 2 geschaltet. Die Diode 11 ist in Richtung von der ersten elektrischen Zuleitung 4 zu der zweiten elektrischen Zuleitung 5 in Durchlassrichtung angeordnet. Hierdurch wird es möglich, den Motor 2 bzw. die beiden elektrischen Zuleitungen 4, 5 kurzzuschließen, sodass der Gleichstrommotor 2 zu einem Gleichstromgenerator wird und somit zumindest in einer Drehrichtung eine Bremswirkung gegen eine von außen erzwungene mechanische Bewegung entfaltet.

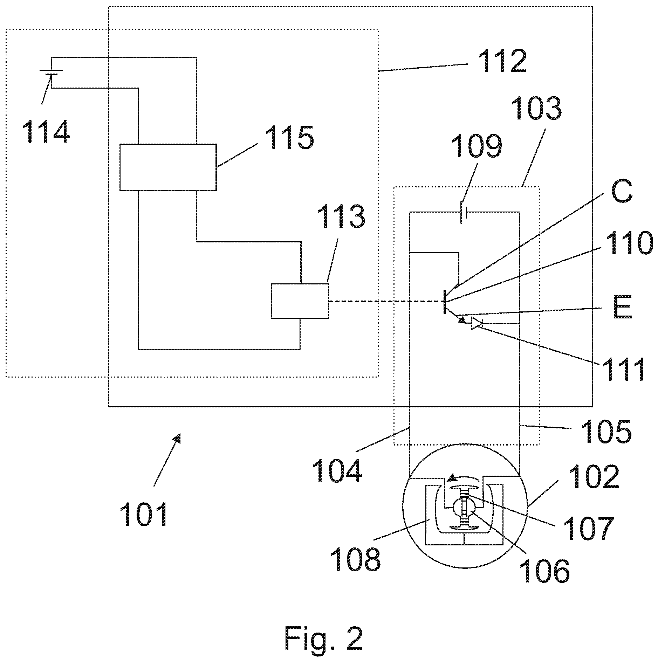

Das Schaltelement 10 wird von außen über einen Schaltsteuerkreis 12 geschaltet. In dem in Fig. 1 gezeigten Ausführungsbeispiel einer erfindungsgemäßen Antriebsvorrichtung 1 umfasst der Schaltsteuerkreis 12 eine als Relais ausgebildete Schaltsteuervorrichtung 13, welche das als Ruhekontakt ausgebildete Schaltelement 10 im Normalbetrieb der Antriebsvorrichtung 1 in einem offenen Zustand belässt und für den Fall einer Störung oder eines Spannungsabfalls in der Antriebsvorrichtung 1 in eine Schließstellung bringt. Der Schaltsteuerkreis 12 umfasst weiter eine zweite Spannungsquelle 14 und eine Logikeinheit 15, wobei die Spannungsquelle 14 sowohl die Logikeinheit 15 als auch die Schaltsteuervorrichtung 13 mit Strom versorgt. Hierdurch ist insbesondere für den Fall, dass die zweite Spannungsquelle 14 ausfallen sollte, garantiert, dass die als Relais ausgebildete Schaltsteuervorrichtung 13 nicht mit Strom versorgt ist und so das mit der Schaltsteuervorrichtung 13 gekoppelte Schaltelement 10 geschlossen wird. Weiter wird es dadurch, dass die Logikeinheit 15 parallel zu der Schaltsteuervorrichtung 13 geschaltet ist, ermöglicht, die Stromversorgung der Schaltsteuervorrichtung 13 auch für einen Spannungsabfall der Spannungsquelle 14 so zu regulieren, dass das mit der Schaltsteuervorrichtung 13 gekoppelte Schaltelement 10 geschlossen wird. Fig. 2 zeigt schematisch ein zweites Ausführungsbeispiel einer Antriebsvorrichtung 101. Die Bezugszeichen ähnlicher oder gleicher Bauteile gegenüber dem in Fig. 1 gezeigten Ausführungsbeispiel sind um 100 inkrementiert. Im Unterschied zu dem in Fig. 1 gezeigten ersten Ausführungsbeispiel umfasst der Versorgungsschaltkreis 103 ein zwischen der ersten elektrischen Zuleitung 104 und der zweiten elektrischen Zuleitung 105 parallel zu dem Motor 102 geschaltetes Schaltelement 110, welches als bipolarer Transistor ausgebildet ist. In Reihe zu dem Bipolartransistor 110 ist, wie auch in dem ersten Ausführungsbeispiel aus Fig. 1, eine Diode 111 geschaltet. Der Bipolartransistor 110 ist als ein npn-Transistor ausgebildet, wobei die Basis B mit einer Schaltsteuervorrichtung 113 verbunden ist.

Die Schaltsteuervorrichtung 113 ist Bestandteil eines Schaltsteuerkreises 112, wobei parallel zu der Schaltsteuervorrichtung 113 eine Logikeinheit 115 geschaltet ist. Weiter umfasst der Schaltsteuerkreis 113 eine Spannungsversorgung 114, welche sowohl die Logikeinheit 115 als auch die Schaltsteuervorrichtung 113 mit Strom versorgt. Die Schaltsteuervorrichtung 113 stellt dabei eine Steuerspannung an der Basis B des Bipolartransistors 110 bereit, sodass über die Schaltsteuervorrichtung 113 der elektrische Widerstand zwischen der ersten elektrischen Zuleitung 104 und der zweiten elektrischen Zuleitung 105 reguliert werden kann. Dabei ist die erste Zuleitung 104 mit den Kollektor C und die Diode 110 mit dem Emitter E des Bipolartransistors 110 verbunden. Hierdurch wird die Möglichkeit geschaffen, die erste Zuleitung 104 und die zweite elektrische Zuleitung 105 mittels der durch die Schaltsteuervorrichtung 113 bereitgestellten Steuerspannung, welche an der Basis B angelegt wird, kurzzuschließen.

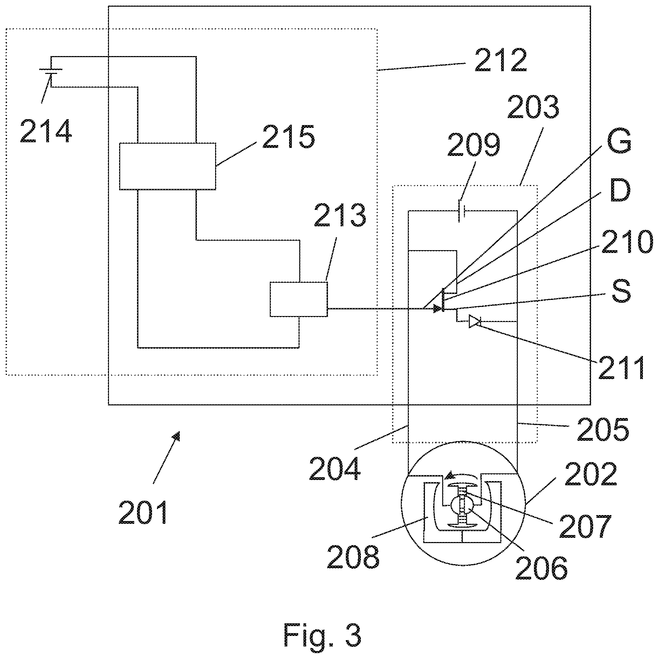

Fig. 3 zeigt ein drittes Ausführungsbeispiel einer Antriebsvorrichtung 201. Die Antriebsvorrichtung 201 ist im Wesentlichen ähnlich zu dem in Fig. 2 gezeigten zweiten Ausführungsbeispiel aufgebaut, wobei das als Transistor ausgebildete Schaltelement 210 nunmehr als Unipolartransistor bzw. MOSFET ausgebildet ist. Das Gate G des Transistors 210 ist mit der Schaltsteuervorrichtung 213 gekoppelt, wobei die Schaltsteuervorrichtung 213 eine Steuerspannung an dem Gate G bereitstellt und so den elektrischen Widerstand steuert. Der Source Anschluss S ist dabei an der Diode 211 und der Drain Anschluss D ist an der ersten elektrischen Zuleitung 204 angeschlossen.

Nachfolgend wird die Funktionsweise der Antriebsvorrichtung beispielhaft an dem in Figur 1 gezeigten Ausführungsbeispiel erläutert.

Fig. 1 zeigt die Antriebsvorrichtung 1 während des normalen Betriebs. Dabei ist das Schaltelement 10 in einer geöffneten Stellung, sodass der Motor 2 über den Versorgungsschaltkreis 3 mit Strom versorgt werden kann. Für den Fall, dass ein Spannungsabfall an der Spannungsquelle 9 des Versorgungsschaltkreises 3 oder ein vollständiger Spannungsverlust an der Spannungsquelle 14 des Schaltsteuerkreises 12 auftritt, wird das als Ruhekontakt ausgebildete Schaltelement 10 über die als Relais ausgebildete Schaltsteuervorrichtung 13 in die gestrichelt eingezeichnete geschlossene Stellung gebracht, sodass die erste elektrische Zuleitung 4 und die zweiten elektrischen Zuleitung 5 zumindest in der Richtung von der ersten elektrischen Zuleitung 4 zu der zweite elektrische Zuleitung 5 über die Diode 11 kurzgeschlossen sind. Dieser Zustand entspricht dabei einem Fail Safe-Modus, wie dieser bei einem Ausfall der Stromversorgung im Fahrzeug oder sogar einer Beschädigung der Antriebsvorrichtung 1 vorgesehen ist. Die als Freilaufdiode ausgebildete Diode 11 ist dabei in Richtung von der ersten elektrischen Zuleitung 4 zu der zweiten elektrischen Zuleitung 5 in Durchlassrichtung geschaltet, sodass die Antriebsvorrichtung 1 bzw. der Motor 2 in Schließrichtung der Fahrzeugklappe gebremst bzw. festgestellt ist und gleichzeitig in Öffnungsrichtung der Fahrzeugklappe manuell ohne größeren Widerstand bewegbar ist. Hierdurch wird es dem Benutzer möglich, beispielsweise eine als Seitentür ausgebildete Fahrzeugklappe zu öffnen, wenn sich das Fahrzeug am Berg befindet und verhindert werden soll, dass die Seitentür aufgrund des großen Gravitationsmomentes wieder ins Schloss zurückfällt.

Vorstehend wurde die Erfindung anhand mehrerer Ausführungsbeispiele erläutert, bei denen jeweils ein Schaltelement und eine Diode parallel zu dem Motor geschaltet sind. Es versteht sich, dass auch mehrere parallel geschaltete Paare von Schaltelementen und Dioden vorgesehen sein können. Durch die funktionelle Redundanz wird dabei auch für den Fall, dass ein Schaltelement oder eine Diode beschädigt sei sollte, sichergestellt, dass ein Kurzschluss des Motors bei einem Spannungsabfall immer noch sicher und zuverlässig erfolgt.

## Patentansprüche

1. Antriebsvorrichtung für eine Fahrzeugklappe, umfassend
einen Elektromotor (2, 102, 202) zum Antrieb der Fahrzeugklappe,
einen Versorgungsschaltkreis (3, 103, 203), umfassend eine erste Spannungsquelle (9, 109, 209) zur Stromversorgung des Elektromotors (2), eine erste elektrische Zuleitung (4, 104, 204) und eine zweite elektrische Zuleitung (5, 105, 205), wobei die erste Spannungsquelle (9, 109, 209) zwischen der ersten elektrischen Zuleitung (4, 104, 204) und der zweiten elektrischen Zuleitung (5, 105, 205) angeordnet ist,
einen Steuerungsschaltkreis (12, 112, 212), umfassend eine Logikeinheit (15, 115, 215), eine zweite Spannungsquelle (14) und eine Schaltsteuervorrichtung (13, 113, 213), wobei ein Schaltelement (10, 110, 210) und eine Diode (11, 111, 211) zwischen der ersten elektrischen Zuleitung (4, 104, 204) und der zweiten elektrischen Zuleitung (5, 105, 205) angeschlossen sind, wobei das Schaltelement (10, 110, 210) und die Diode (11, 111, 211) in Reihe geschaltet sind und das Schaltelement (10, 110) mit der Schaltsteuervorrichtung (13, 113, 213) gekoppelt ist, und wobei die Schaltsteuervorrichtung (13, 113, 213) eine Steuerspannung zum Schalten des Schaltelementes (10, 110, 210) bereitstellt,
**dadurch gekennzeichnet,**
**dass** die Logikeinheit parallel zu der Schaltsteuervorrichtung geschaltet ist, und
**dass** die zweite Spannungsquelle (14, 114, 214) sowohl die Logikeinheit (15, 115, 215) als auch die Schaltsteuervorrichtung (13) mit Strom versorgt.

2. Antriebsvorrichtung nach Anspruch 1, **dadurch gekennzeichnet, dass** die Diode (11, 111, 211) in Richtung von der ersten elektrischen Zuleitung (4, 104, 204) zu der zweiten elektrischen Zuleitung (5, 105, 205) in Durchlassrichtung angeordnet ist.

3. Antriebsvorrichtung nach Anspruch 1, **dadurch gekennzeichnet, dass** die Diode (11, 111, 211) in Richtung von der ersten elektrischen Zuleitung (4, 104, 204) zu der zweiten elektrischen Zuleitung (5, 105, 205) in Sperrrichtung angeordnet ist.

4. Antriebsvorrichtung nach einem der vorhergehenden Ansprüche, **dadurch gekennzeichnet, dass** die Diode (11, 111, 211) zwischen der ersten elektrischen Zuleitung (4, 104, 204) und der zweiten elektrischen Zuleitung (5, 105, 205) derart angeordnet, dass die Antriebsvorrichtung bei einem Kurzschluss in Schließrichtung gebremst wird.

5. Antriebsvorrichtung nach einem der der vorhergehenden Ansprüche, **dadurch gekennzeichnet, dass** die Schaltsteuervorrichtung (13) als Relais ausgebildet ist.

6. Antriebsvorrichtung nach Anspruch 5, **dadurch gekennzeichnet, dass** das mit der Schaltsteuervorrichtung (13) gekoppelte Schaltelement (10) als Ruhekontakt ausgebildet ist.

7. Antriebsvorrichtung nach Anspruch 5 oder 6, **dadurch gekennzeichnet, dass** das mit der Schaltsteuervorrichtung (13) gekoppelte Schaltelement (10) als Arbeitskontakt ausgebildet ist.

8. Antriebsvorrichtung nach einem der vorhergehenden Ansprüche, **dadurch gekennzeichnet, dass** die Logikeinheit (15) parallel zu der Schaltsteuervorrichtung (13) geschaltet ist.

9. Antriebsvorrichtung nach einem der vorhergehenden Ansprüche, **dadurch gekennzeichnet, dass** die Diode (11, 111, 211) als Freilaufdiode ausgebildet ist.

10. Antriebsvorrichtung nach einem der Ansprüche 1 bis 4, **dadurch gekennzeichnet, dass** das Schaltelement (110) als bipolarer Transistor ausgebildet ist.

11. Antriebsvorrichtung nach Anspruch 10, **dadurch gekennzeichnet, dass** die Basis (B) des Transistors (110) mit der Schaltsteuervorrichtung (113) verbunden ist, wobei die Schaltsteuervorrichtung (113) eine Steuerspannung zwischen Basis B) und Kollektor (C) des Transistors bereitstellt.

12. Antriebsvorrichtung nach einem der Ansprüche 1 bis 4, **dadurch gekennzeichnet, dass** das Schaltelement (210) als unipolarer Transistor ausgebildet ist.

13. Antriebsvorrichtung nach Anspruch 12, **dadurch gekennzeichnet, dass** das Gate (G) des Transistors (210) mit der Schaltsteuervorrichtung (213) verbunden ist, wobei die Schaltsteuervorrichtung (213) eine Steuerspannung an dem Gate (G) des Transistors bereitstellt.

14. Fahrzeug, umfassend
eine Fahrzeugklappe, wobei die Fahrzeugklappe verschwenkbar an einem Fahrzeugkarosserieteil angeordnet ist,
eine Antriebsvorrichtung, wobei die Antriebsvorrichtung mit einem ersten Ende verschwenkbar an einem von Fahrzeugklappe und Fahrzeugkarosserieteil und mit einem zweiten Ende verschwenkbar an dem anderen von Fahrzeugklappe und Fahrzeugkarosserieteil gekoppelt ist,
**dadurch gekennzeichnet,**
**dass** die Antriebsvorrichtung nach einem der vorhergehenden Ansprüche ausgebildet ist.

## Claims

1. Drive device for a vehicle flap, comprising
an electric motor (2, 102, 202) for driving the vehicle flap,
a supply circuit (3, 103, 203), comprising a first voltage source (9, 109, 209) for supplying power to the electric motor (2), a first electrical lead (4; 104; 204) and a second electrical lead (5; 105; 205), the first voltage source (9; 109; 209) being arranged between the first electrical lead (4; 104; 204) and the second electrical lead (5; 105; 205),
a control circuit (12; 112; 212), comprising a logic unit (15; 115; 215), a second voltage source (14) and a switch control device (13; 113; 213), wherein a switching element (10; 110; 210) and a diode (11; 111; 211) are connected between the first electrical lead (4; 104; 204) and the second electrical lead (5; 105; 205), wherein the switching element (10; 110; 210) and the diode (11; 111; 211) are connected in series and the switching element (10, 110) is coupled to the switch control device (13, 113, 213), and wherein the switch control device (13; 113; 213) provides a control voltage for switching the switching element (10; 110; 210), **characterized in**
**that** the logic unit and the switch control device are connected in parallel and
in that the second voltage source (14, 114, 214) supplies the logic unit (15, 115, 215) and the switch control device (13) with power.

2. Drive device according to claim 1, **characterized in that** the diode (11; 111; 211) is arranged in the forward direction, in the direction from the first electrical lead (4; 104; 204) to the second electrical lead (5; 105; 205).

3. Drive device according to claim 1, **characterized in that** the diode (11; 111; 211) is arranged in the reverse direction, in the direction from the first electrical lead (4; 104; 204) to the second electrical lead (5; 105; 205).

4. Drive device according to any of the preceding claims, **characterized in that** the diode (11; 111; 211) is arranged in between the first electrical lead (4; 104; 204) to the second electrical lead (5; 105; 205), such that the drive device is braked in the closing direction in the event of a short circuit.

5. Drive device according to any of the preceding claims, **characterized in that** the switch control device (13) is designed as a relay.

6. Drive device according to claim 5, **characterized in that** the switching element (10) that is coupled to the switch control device (13) is designed as a normally closed contact.

7. Drive device according to claim 5 or 6, **characterized in that** the switching element (10) that is coupled to the switch control device (13) is designed as an operating contact.

8. Drive device according to any of the preceding claims, **characterized in that** the logic unit (15) and the switch control device (13) are connected in parallel .

9. Drive device according to any of the preceding claims, **characterized in that** the diode (11; 111; 211) is designed as a flyback diode.

10. Drive device according to one of claims 1 to 4, **characterized in that** the switching element (110) is designed as a bipolar transistor.

11. Drive device according to claim 10, **characterized in that** the base (B) of the transistor (110) is connected to the switch control device (113), wherein the switch control device (113) provides a control voltage between the base (B) and collector (C) of the transistor (110).

12. Drive device according to one of claims 1 to 4, **characterized in that** the switching element (210) is designed as a unipolar transistor.

13. Drive device according to claim 12, **characterized in that** the gate (G) of the transistor (210) is connected to the switch control device (213), wherein the switch control device (213) provides a control voltage at the gate (G) of the transistor.

14. Vehicle, comprising
a vehicle flap, the vehicle flap being pivotably arranged on a vehicle body part,
a drive device, a first end of the drive device being pivotably coupled to one of the vehicle flap and vehicle body part, and a second end of said drive device being pivotably coupled to the other of the vehicle flap and vehicle body part,
**characterized in**
**that** the drive device is designed according to any of the preceding claims.

## Revendications

1. Dispositif d'entraînement pour un élément de type clapet de véhicule, comprenant
un moteur électrique (2, 102, 202) pour l'entraînement de l'élément de type clapet de véhicule,
un circuit d'alimentation (3, 103, 203), comprenant une première source de tension (9, 109, 209) pour l'alimentation en courant du moteur électrique (2), une première conduite d'alimentation électrique (4, 104, 204) et une seconde conduite d'alimentation électrique (5, 105, 205), dans lequel la première source de tension (9, 109, 209) est disposée entre la première conduite d'alimentation électrique (4, 104, 204) et la seconde conduite d'alimentation électrique (5, 105, 205),
un circuit de commande (12, 112, 212), comprenant une unité logique (15, 115, 215), une seconde source de tension (14) et un dispositif de commande de commutation (13, 113, 213), dans lequel un élément de commutation (10, 110, 210) et une diode (11, 111, 211) sont connectés entre la première conduite d'alimentation électrique (4, 104, 204) et la seconde conduite d'alimentation électrique (5, 105, 205), dans lequel l'élément de commutation (10, 110, 210) et la diode (11, 111, 211) sont montés en série et l'élément de commutation (10, 110) est couplé au dispositif de commande de commutation (13, 113, 213), et dans lequel le dispositif de commande de commutation (13, 113, 213) fournit une tension de commande pour la commutation de l'élément de commutation (10, 110, 210),
**caractérisé en ce**
**que** l'unité logique est montée en parallèle avec le dispositif de commande de commutation et
**que** la seconde source de tension (14, 114, 214) alimente en courant à la fois l'unité logique (15, 115, 215) et le dispositif de commande de commutation (13).

2. Dispositif d'entraînement selon la revendication 1, **caractérisé en ce que** la diode (11, 111, 211) est disposée dans le sens passant dans une direction allant de la première conduite d'alimentation électrique (4, 104, 204) à la seconde conduite d'alimentation électrique (5, 105, 205).

3. Dispositif d'entraînement selon la revendication 1, **caractérisé en ce que** la diode (11, 111, 211) est disposée dans le sens non passant dans une direction allant de la première conduite d'alimentation électrique (4, 104, 204) à la seconde conduite d'alimentation électrique (5, 105, 205).

4. Dispositif d'entraînement selon l'une des revendications précédentes, **caractérisé en ce que** la diode (11, 111, 211) est disposée entre la première conduite d'alimentation électrique (4, 104, 204) et la seconde conduite d'alimentation électrique (5, 105, 205) de telle sorte que le dispositif d'entraînement est freiné en cas de court-circuit dans le sens de fermeture.

5. Dispositif d'entraînement selon l'une des revendications précédentes, **caractérisé en ce que** le dispositif de commande de commutation (13) est réalisé sous forme de relais.

6. Dispositif d'entraînement selon la revendication 5, **caractérisé en ce que** l'élément de commutation (10) couplé au dispositif de commande de commutation (13) est réalisé sous forme de contact de repos.

7. Dispositif d'entraînement selon la revendication 5 ou 6, **caractérisé en ce que** l'élément de commutation (10) couplé au dispositif de commande de commutation (13) est réalisé sous forme de contact de travail.

8. Dispositif d'entraînement selon l'une des revendications précédentes, **caractérisé en ce que** l'unité logique (15) est montée en parallèle avec le dispositif de commande de commutation (13).

9. Dispositif d'entraînement selon l'une des revendications précédentes, **caractérisé en ce que** la diode (11, 111, 211) est réalisée sous forme de diode antiretour.

10. Dispositif d'entraînement selon l'une des revendications 1 à 4, **caractérisé en ce que** l'élément de commutation (110) est réalisé sous forme de transistor bipolaire.

11. Dispositif d'entraînement selon la revendication 10, **caractérisé en ce que** la base (B) du transistor (110) est connectée au dispositif de commande de commutation (113), dans lequel le dispositif de commande de commutation (113) fournit une tension de commande entre la base (B) et un collecteur (C) du transistor.

12. Dispositif d'entraînement selon l'une des revendications 1 à 4, **caractérisé en ce que** l'élément de commutation (210) est réalisé sous forme de transistor unipolaire.

13. Dispositif d'entraînement selon la revendication 12, **caractérisé en ce que** la grille (G) du transistor (210) est connectée au dispositif de commande de commutation (213), dans lequel le dispositif de commande de commutation (213) fournit une tension de commande à la grille (G) du transistor.

14. Véhicule, comprenant
un élément de type clapet de véhicule, dans lequel l'élément de type clapet de véhicule est disposé de manière à pouvoir pivoter sur une partie de carrosserie de véhicule,
un dispositif d'entraînement, dans lequel le dispositif d'entraînement est accouplé, à une première extrémité, à l'un parmi l'élément de type clapet de véhicule et la partie de carrosserie de véhicule de manière à pouvoir pivoter et est accouplé, à une seconde extrémité, à l'autre élément parmi l'élément de type clapet de véhicule et la partie de carrosserie de véhicule de manière à pouvoir pivoter,
**caractérisé en ce**
**que** le dispositif d'entraînement est réalisé selon l'une des revendications précédentes.
